# EUROPEAN PATENT APPLICATION

(11) **EP 3 872 610 A1**
(43) Date of publication of application: **01.09.2021**
(21) Application number: 19881321.4
(22) Date of filing: 06.11.2019
(51) Int. Cl.: G06F 3/0487

(54) **ROTATION DISPLAY METHOD AND APPARATUS FOR SCREEN OF ON-BOARD UNIT**

(30) Priority: 06.11.2018 CN 201811313774
(71) Applicant: BYD Company Limited, Guangdong 518118 (CN)
(72) Inventor: PENG, Junna, Shenzhen, Guangdong 518118 (CN); LANG, Wenlong, Shenzhen, Guangdong 518118 (CN)
(74) Representative: Hoffmann Eitle
(86) International application number: PCT/CN2019/116016
(87) International publication number: WO 2020/094062

(57) **Abstract**

The present disclosure provides an on-board unit (OBU) screen rotation display method and apparatus, where the method includes: obtaining first acceleration data of an OBU screen in a current cycle, and determining a screen display direction matching the first acceleration data as a first screen display direction; obtaining second acceleration data of the OBU screen in a next cycle, determining a screen display direction matching the second acceleration data, and determining that the next cycle is a screen rotation effective cycle if the screen display direction matching the second acceleration data is a second screen display direction; and if a quantity of consecutive screen rotation effective cycles exceeds a preset quantity, controlling the OBU screen to rotate from the first screen display direction to the second screen display direction. Therefore, the OBU screen is prevented from rotating by mistake, thus improving the stickiness between a user and a product.

## Description

### CROSS-REFERENCE TO RELATED APPLICATIONS

The present disclosure claims priority to Chinese Patent Application No "201811313774.4" filed by the BYD Co., Ltd. on November 6, 2018 and entitled "ON-BOARD UNIT SCREEN ROTATION DISPLAY METHOD AND APPARATUS".

### FIELD

The present disclosure relates to the technical field of vehicle multimedia control, and in particular, to an On-Board Unit (OBU) screen rotation display method and an apparatus.

### BACKGROUND

Currently, with the continuous development of the automobile industry, automobiles have become an indispensable part in people's daily life, and an On-Board Unit (OBU) system integrated with the smart phone ecology plays an increasingly important role in the automobile industry. The OBU system allows a user to control vehicle functions or view vehicle information by displaying related information on a screen, and a rotation mechanism of the OBU system helps the user to better use the screen at various angles.

In the related art, the rotation mechanism of the OBU system is a rotation mechanism using the smart phone ecology. That is, three-axis data reported by an accelerometer sensor, then a rotation direction is calculated according to a specific algorithm, and the screen is rotated. However, in some specific driving environments, for example, when a vehicle travels through a bumpy road or a speed bump, a screen display exception occurs, that is, the screen display direction possibly rotates by 90 degrees or 180 degrees, that is, the OBU screen display direction is rotated by mistake.

### SUMMARY

The present disclosure provides an On-Board Unit (OBU) screen rotation display method and apparatus to resolve the technical problem that a screen display direction of an OBU system is rotated by mistake in the prior art.

An aspect of embodiments of the present disclosure provides an OBU screen rotation display method, including the following steps: obtaining first acceleration data of an OBU screen in a current cycle, and determining a screen display direction matching the first acceleration data as a first screen display direction according to a preset matching strategy; obtaining second acceleration data of the OBU screen in a next cycle, determining a screen display direction matching the second acceleration data according to the preset matching strategy, and determining that the next cycle is a screen rotation effective cycle if the screen display direction matching the second acceleration data is a second screen display direction; and when a quantity of consecutive screen rotation effective cycles exceeds a preset quantity, rotating the OBU screen display direction from the first screen display direction to the second screen display direction.

Another aspect of the embodiments of the present disclosure provides an OBU screen rotation display apparatus, including: a first determining module, configured to obtain first acceleration data of an OBU screen in a current cycle, and determine a screen display direction matching the first acceleration data as a first screen display direction according to a preset matching strategy; a second determining module, configured to obtain second acceleration data of the OBU screen in a next cycle, and determine a screen display direction matching the second acceleration data according to the preset matching strategy; a third determining module, configured to determine that the next cycle is a screen rotation effective cycle when a screen display direction matching the second acceleration data is a second screen display direction; and a processing module, configured to control the OBU screen display direction to rotate from the first screen display direction to the second screen display direction when it is determined that a quantity of consecutive screen rotation effective cycles exceeds a preset quantity.

Yet another aspect of the embodiments of the present disclosure provides a non-temporary computer-readable medium, storing a computer program. When the computer program is executed by a processor, the OBU screen rotation display method according to the foregoing embodiments is implemented.

Still another aspect of the embodiments of the present disclosure provides an OBU multimedia device, including a memory, a processor, and a computer program stored on the memory and operable on the processor. When the processor executes the computer program, the OBU screen rotation display method according to the foregoing embodiments is implemented.

The technical solutions disclosed by the present disclosure have the following beneficial effects:

obtaining first acceleration data of an OBU screen in a current cycle, and determining a screen display direction matching the first acceleration data as a first screen display direction according to a preset matching strategy; obtaining second acceleration data of the OBU screen in a next cycle, and determining a screen display direction matching the second acceleration data according to the preset matching strategy; if the screen display direction matching the second acceleration data is a second screen display direction, determining that the next cycle is a screen rotation effective cycle; further determining whether a quantity of consecutive screen rotation effective cycles exceeds a preset quantity, and if yes, controlling the OBU screen to rotate from the first screen display direction to the second screen display direction. Therefore, the OBU screen display direction is prevented from being rotated by mistake, improving the stickiness between a user and a product.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description made with reference to the following accompanying drawings, where:
FIG. 1 is a flowchart of an On-Board Unit (OBU) screen rotation display method according to an embodiment of the present disclosure;
FIG. 2-1 is a schematic diagram of a display scenario of an OBU screen according to an embodiment of the present disclosure;
FIG. 2-2 is a schematic diagram of a display scenario of an OBU screen according to another embodiment of the present disclosure;

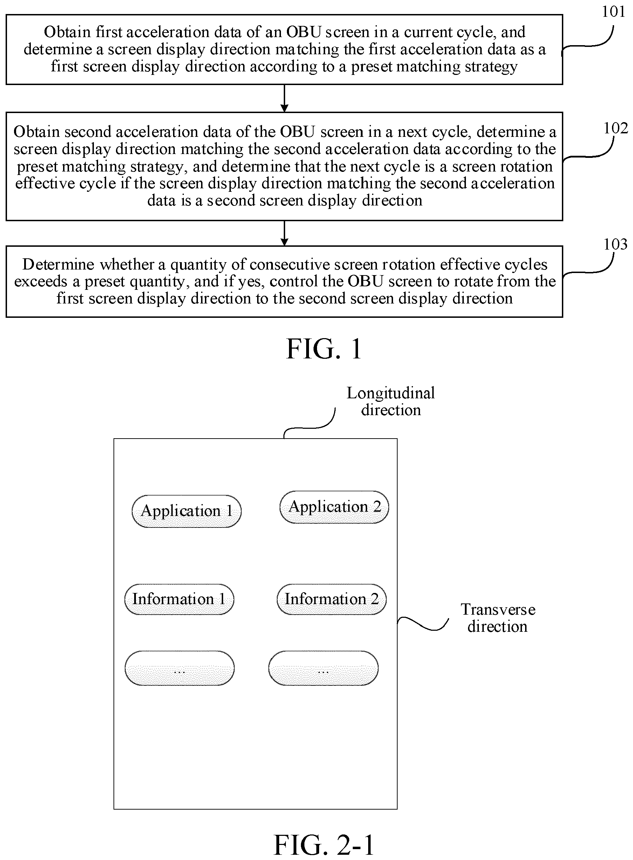

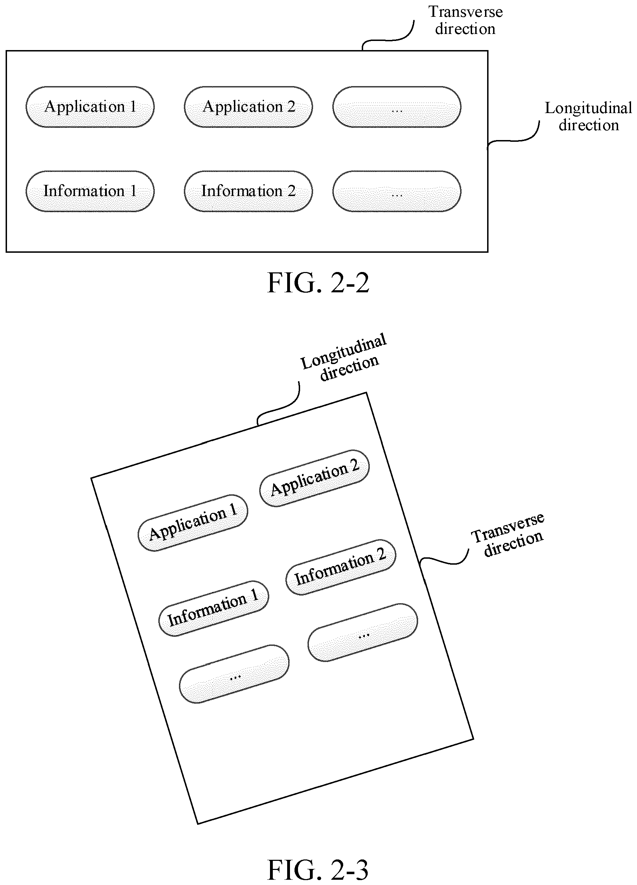

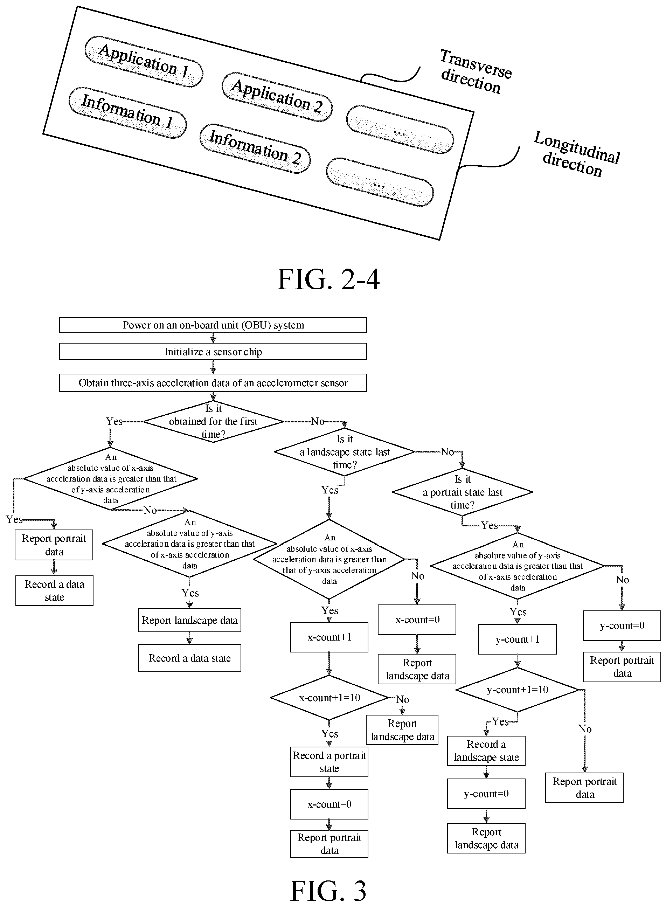

FIG. 2-3 is a schematic diagram of a display scenario of an OBU screen according to still another embodiment of the present disclosure;
FIG. 2-4 is a schematic diagram of a display scenario of an OBU screen according to yet another embodiment of the present disclosure;
FIG. 3 is a flowchart of an OBU screen rotation display method according to a specific embodiment of the present disclosure;
   and

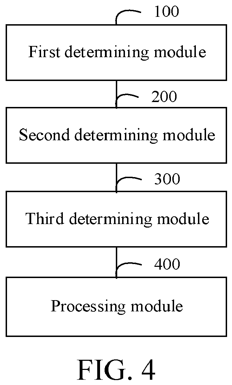

FIG. 4 is a schematic structural diagram of an OBU screen rotation display apparatus according to an embodiment of the present disclosure.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

An On-Board Unit (OBU) screen rotation display method and apparatus of the embodiments of the present disclosure are described below with reference to the accompanying drawings. The OBU screen rotation display method of an embodiment of the present disclosure is executed by a rotatable OBU device in a vehicle. As the OBU device rotates, an OBU screen display direction rotates adaptively.

FIG. 1 is a flowchart of an OBU screen rotation display method according to an embodiment of the present disclosure. As shown in FIG. 1, the method includes the following steps:

Step 101: Obtaining first acceleration data of an OBU screen in a current cycle, and determine a screen display direction matching the first acceleration data as a first screen display direction according to a preset matching strategy.

In an embodiment of the present disclosure, acceleration data may be detected based on a three-axis sensor, where the acceleration data shall at least include acceleration data of a horizontal direction and acceleration data of a vertical direction. It is not difficult to understand based on a rotation mechanism that, when an absolute value of the acceleration data of the horizontal direction of the OBU screen is greater than that of the acceleration data of the vertical direction of the OBU screen, a current placement direction of the OBU screen is considered to be a vertical placement direction. Therefore, as shown in FIG. 2-1, in order to adapt to the placement direction, a display direction of the OBU screen shall be the vertical direction. When an absolute value of the acceleration data of the vertical direction of the OBU screen is greater than that of the acceleration data of the horizontal direction of the OBU screen, a current placement direction of the OBU screen is considered to be a horizontal placement direction. Therefore, as shown in FIG. 2-2, in order to adapt to the placement direction, a display direction of the OBU screen shall be the horizontal direction. Therefore, on the basis of such a rotation rule, a preset strategy is created. The matching strategy includes extracting, based on a filtering algorithm for example, transverse acceleration data (acceleration data of the horizontal direction) and longitudinal acceleration data (acceleration data of the vertical direction) in acceleration data; when an absolute value of the transverse acceleration data is greater than that of the longitudinal acceleration data, determining that a matching screen display direction is a portrait display direction, and when the absolute value of the longitudinal acceleration data is greater than that of the transverse acceleration data, determining that a matching screen display direction is a landscape display direction.

Definitely, during an actual execution process, according to different placement directions of the OBU screen, display directions of the OBU screen may further include another direction besides the landscape display direction and the portrait display direction, for example, a display direction inclined to a longitudinal direction as shown in FIG. 2-3, and a display direction inclined to a transverse direction as shown in FIG. 2-4.

In an example of the present disclosure, the first acceleration data of the OBU screen in the current cycle is obtained, and the screen display direction matching the first acceleration data is determined as the first screen display direction according to the preset matching strategy. When the current cycle is an initial cycle, to avoid affecting normal display of the OBU screen, the OBU screen is controlled to display according to the first screen display direction.

Step 102: Obtaining second acceleration data of the OBU screen in a next cycle, determine a screen display direction matching the second acceleration data according to the preset matching strategy, and determine that the next cycle is a screen rotation effective cycle if the screen display direction matching the second acceleration data is a second screen display direction.

Step 103: If a quantity of consecutive screen rotation effective cycles exceeds a preset quantity, rotating the OBU screen display direction from the first screen display direction to the second screen display direction.

In the related art, the screen display direction is adapted based on the acceleration data of the OBU screen in every current cycle. However, such an adaptation manner cannot prevent the screen display direction from rotating by mistake caused by some special road conditions. In order to resolve the problem, in the embodiments of the present disclosure, a trigger cycle of an OBU screen rotation action is lengthened. The OBU screen display direction is rotated only when it is determined that the screen needs to be rotated in a plurality of subsequent cycles, thereby ensuring rotation accuracy of the OBU screen display direction and preventing the OBU screen display direction from rotating by mistake in the case of sudden changes.

In an example of the present disclosure, and in an embodiment of the present disclosure, the second acceleration data of the OBU screen in the next cycle is obtained, and the screen display direction matching the second acceleration data is determined according to the preset matching strategy. If the screen display direction matching the second acceleration data is the second screen display direction different from the first screen display direction, it is determined that the next cycle is a screen rotation effective cycle. In some possible examples, the first screen display direction is the landscape display direction, and the second screen display direction is the portrait display direction, while in other possible examples, the first screen display direction is the portrait display direction, and the second screen display direction is the landscape display direction.

In an embodiment of the present disclosure, when it is determined that the next cycle is a screen rotation effective cycle, the display direction of the OBU screen is not directly changed; instead, it is determined whether the quantity of consecutive screen rotation effective cycles exceeds the preset quantity, that is, whether all screen display directions matching the acceleration data in the plurality of following cycles are the second screen display direction. If yes, the OBU screen is controlled to switch from the first screen display direction to the second screen display direction, thereby preventing the OBU screen display direction from rotating by mistake.

The foregoing preset quantity is related to a length of an acquisition cycle of the acceleration data. If the length of the acquisition cycle of the acceleration data is relatively long, in order to decrease a delay of changing the screen display direction, the preset quantity is relatively small. If the length of the acquisition cycle of the acceleration data is relatively short, When the length of the acquisition cycle of the acceleration data is relatively short, in order to improve accuracy of changing the screen display direction, the preset quantity is relatively large.

Definitely, in order to improve the adaptability of the preset quantity and improve utilization of resources, in an embodiment of the present disclosure, the preset quantity is adjusted according to road condition information. In this embodiment, if a road is relatively flat, for example, when a vehicle is traveling on a relatively flat expressway, it is considered that bumps are less likely to occur. Therefore, a probability of triggering a rotation event by mistake is considered to be relatively low and the preset quantity is set to a relatively low value. When the road condition is relatively complex, for example, when a vehicle is traveling on a relatively bumpy mountain road, it is considered that bumps are more likely to occur. Therefore, the probability of triggering a rotation event by mistake is relatively high and the preset quantity is set to a relatively high value.

In examples of the present disclosure, in this example, current road condition information of a vehicle is obtained. For example, the current road condition information may be recognized based on a positioning location. For example, when a current location is a mountainous region, the road condition information is a map displaying the mountainous region in a related map. Alternatively, a road condition acquired by a camera in a vehicle may be used as the road condition information. Furthermore, road condition features are recognized based on the road condition information, for example, recognizing whether there is a mountainous region, and whether there is a route with an altitude. In addition, the preset quantity is adjusted according to the road condition features. In the case of a road condition feature of a relatively flat expressway, the preset quantity is adjusted to be a relatively low value, and in the case of a road condition feature of a relatively bumpy mountainous region, the preset quantity is adjusted to be a relatively high value.

To make a person skilled in the art understand the OBU screen rotation display method more clearly, descriptions are made below with reference to an example of the present disclosure. In this example, the preset quantity is 10, transverse acceleration data is x-axis acceleration data, and longitudinal acceleration data is y-axis acceleration data. Descriptions are as follows:

As shown in FIG. 3, after an OBU system is powered on, sensor data is initialized after the power-on, and three-axis original data is detected periodically. If three-axis acceleration data is obtained for the first time, it is determined whether an absolute value of the x-axis acceleration data is greater than that of the y-axis acceleration data. If yes, a portrait state is reported, and a data state is recorded. If not, it is determined whether the absolute value of the y-axis acceleration data is greater than that of the x-axis acceleration data, and if yes, landscape data is reported and a data state is recorded.

If the three-axis acceleration data is not obtained for the first time, it is determined whether a previous screen state is a landscape state. If yes, it is determined whether the absolute value of the x-axis acceleration data is greater than that of the y-axis acceleration data in subsequent cycles. If yes, the number of times x-count of the absolute value of the x-axis acceleration data being greater than that of the y-axis acceleration data is recorded. It is determined whether x-count is 10, and if yes, x-count is reset and portrait data is reported. If x-count is less than 10, the absolute value of the x-axis acceleration data is less than that of the y-axis acceleration data, and landscape data is reported.

In this embodiment, if a previous display state of the OBU screen is a portrait state, it is determined whether the absolute value of the y-axis acceleration data is greater than that of the x-axis acceleration data in subsequent cycles. If yes, the number of times y-count of the absolute value of the y-axis acceleration data being greater than that of the x-axis acceleration data is recorded. It is determined whether y-count is 10, and if yes, y-count is reset and the landscape is reported. If y-count is less than 10, the absolute value of the x-axis acceleration data is greater than that of the y-axis acceleration data, and portrait data is reported.

In conclusion, in the OBU screen rotation display method of the embodiments of the present disclosure, first acceleration data of an OBU screen in a current cycle is obtained, and a screen display direction matching the first acceleration data is determined as a first screen display direction according to a preset matching strategy; second acceleration data of the OBU screen in a next cycle is obtained, and a screen display direction matching the second acceleration data is determined according to the preset matching strategy; if the screen display direction matching the second acceleration data is a second screen display direction, it is determined that the next cycle is a screen rotation effective cycle; furthermore, it is determined whether a quantity of consecutive screen rotation effective cycles exceeds a preset quantity, and if yes, the OBU screen display direction is controlled to rotate from the first screen display direction to the second screen display direction. Therefore, the OBU screen is prevented from rotating by mistake, thus improving the stickiness between a user and a product.

To implement the foregoing embodiments, the present disclosure further provides an OBU screen rotation display apparatus. FIG. 4 is a schematic structural diagram of an OBU screen rotation display apparatus according to an embodiment of the present disclosure. As shown in FIG. 4, the OBU screen rotation display apparatus includes: a first determining module 100, a second determining module 200, a third determining module 300 and a processing module 400.

The first determining module 100 is configured to obtain first acceleration data of an OBU screen in a current cycle, and determine a screen display direction matching the first acceleration data as a first screen display direction according to a preset matching strategy.

The second determining module 200 is configured to obtain second acceleration data of the OBU screen in a next cycle, and determine a screen display direction matching the second acceleration data according to the preset matching strategy.

In an embodiment of the present disclosure, the preset matching strategy includes: extracting transverse acceleration data and longitudinal acceleration data in acceleration data; when an absolute value of the transverse acceleration data is greater than that of the longitudinal acceleration data, determining that a matching screen display direction is a portrait display direction; and when an absolute value of the longitudinal acceleration data is greater than that of the transverse acceleration data, determining that a matching screen display direction is a landscape display direction.

The third determining module 300 is configured to determine that the next cycle is a screen rotation effective cycle when the screen display direction matching the second acceleration data is a second screen display direction.

The processing module 400 is configured to control the OBU screen display direction to rotate from the first screen display direction to the second screen display direction when it is determined that a quantity of consecutive screen rotation effective cycles exceeds a preset quantity.

In an embodiment of the present disclosure, the first screen display direction is a landscape display direction, and the second screen display direction is a portrait display direction; or the first screen display direction is a portrait display direction, and the second screen display direction is a landscape display direction.

It should be noted that the foregoing explanations and descriptions for the OBU screen rotation display method are also applicable to the OBU screen rotation display apparatus in the embodiments of the present disclosure. Implementation principles thereof are similar, and details are not described herein again.

In conclusion, in the OBU screen rotation display apparatus of the embodiments of the present disclosure, first acceleration data of an OBU screen in a current cycle is obtained, and a screen display direction matching the first acceleration data is determined as a first screen display direction according to a preset matching strategy; second acceleration data of the OBU screen in a next cycle is obtained, and a screen display direction matching the second acceleration data is determined according to the preset matching strategy; if the screen display direction matching the second acceleration data is a second screen display direction, it is determined that the next cycle is a screen rotation effective cycle; furthermore, it is determined whether a quantity of consecutive screen rotation effective cycles exceeds a preset quantity, and if yes, the OBU screen display direction is controlled to rotate from the first screen display direction to the second screen display direction. Therefore, the OBU screen display direction is prevented from rotating by mistake, thus improving the stickiness between a user and a product.

To implement the foregoing embodiments, the present disclosure further provides a non-temporary computer-readable medium, storing a computer program thereon. When the computer program is executed by a processor, the OBU screen rotation display method according to the foregoing embodiments is implemented.

To implement the foregoing embodiments, the present disclosure further provides an OBU multimedia device, including a memory, a processor, and a computer program stored on the memory and operable on the processor. When the processor executes the computer program, the OBU screen rotation display method according to the foregoing embodiments is implemented.

In the descriptions of this specification, descriptions with reference to terms such as "an embodiment", "some embodiments", "an example", "a specific example", or "some examples" mean that specific characteristics, structures, materials, or features described with reference to the embodiment or example are included in at least one embodiment or example of the present disclosure. In this specification, the schematic expression of the above terms is not necessarily for the same embodiment or example. In addition, the described specific features, structures, materials, or features can be combined in a proper manner in any one or more embodiments or examples. In addition, without contradiction with each other, a person skilled in the art may combine different embodiments or examples and features of the different embodiments or examples described in this specification.

In addition, the terms "first" and "second" are merely intended for a purpose of description, and shall not be understood as an indication or implication of relative importance or implicit indication of a quantity of indicated technical features. Therefore, a feature defined by "first" or "second" can explicitly or implicitly include at least one of said features. In the descriptions of the present disclosure, unless explicitly specified in the examples of the present disclosure, "a plurality of" means at least two, for example, two or three.

Any process or method in the flowcharts or described herein in another manner may be understood as indicating a module, a segment, or a part including code of one or more executable instructions for implementing a particular logical function or process step. In addition, the scope of preferred embodiments of the present disclosure include other implementations which do not follow the order shown or discussed, including performing, according to involved functions, the functions basically simultaneously or in a reverse order, which should be understood by technical personnel in the technical field to which the embodiments of the present disclosure belong.

The logic and/or steps shown in the flowcharts or described in any other manner herein, for example, a sequenced list that may be considered as executable instructions used for implementing logical functions, may be specifically implemented in any computer readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the specification of this application, the "computer readable medium" may be any apparatus that can include, store, communicate, propagate, or transmit programs to be used by the instruction execution system, apparatus or device or to be used in combination with the instruction execution system, apparatus or device. More examples (a non-exhaustive list) of the computer-readable medium in the examples of the present disclosure include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disc read-only memory (CDROM). In addition, the computer-readable medium may even be paper on which the program can be printed, or another appropriate medium, as the program can be obtained in an electronic manner, for example, by performing optical scanning on the paper or the another medium, and then performing editing and parsing, or performing processing in other appropriate manners when necessary, and then the program can be stored in a computer memory.

It should be understood that parts of the present disclosure may be implemented by using hardware, software, firmware, or combinations thereof. In the foregoing implementations, a plurality of steps or methods may be implemented by using software or firmware that is stored in a memory and executed by a suitable instruction execution system. For example, if implemented by hardware, as in another implementation, the plurality of steps or methods may be implemented by any one of following common technologies in the art or a combination thereof: a discrete logic circuit of a logic gate circuit for realizing a logic function for a data signal, an application specific integrated circuit having a suitable combined logic gate circuit, a programmable gate array (PGA), and a field programmable gate array (FPGA).

A person of ordinary skill in the art may understand that all or some of the steps of the method embodiments may be implemented by a program instructing relevant hardware. The program may be stored in a computer-readable storage medium. When the program is run, one or a combination of the steps of the method embodiments are performed.

In addition, the functional modules in the embodiments of the present disclosure may be integrated into one processing module, or each of the units may exist alone physically, or two or more units may be integrated into one module. The integrated module may be implemented in a hardware form, or may be implemented in a form of a software functional module. If implemented in the form of software functional modules and sold or used as an independent product, the integrated module may also be stored in a computer-readable storage medium.

The aforementioned storage medium may be a read-only memory, a magnetic disk, or an optical disc. Although the embodiments of the present disclosure are shown and described above, it can be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

1. An On-Board Unit (OBU) screen rotation display method, comprising:
obtaining first acceleration data of an OBU screen in a first cycle, and determining a screen display direction matching the first acceleration data as a first screen display direction according to a preset matching strategy;
obtaining second acceleration data of the OBU screen in a second cycle subsequent to the first cycle, determining a screen display direction matching the second acceleration data according to the preset matching strategy, and determining that the second cycle is a screen rotation effective cycle if the screen display direction matching the second acceleration data is a second screen display direction; and
in response to that a quantity of consecutive screen rotation effective cycles exceeds a preset quantity, rotating the OBU screen from the first screen display direction to the second screen display direction.

2. The method according to claim 1, wherein
the first screen display direction is a landscape display direction, and the second screen display direction is a portrait display direction, or,
the first screen display direction is a portrait display direction, and the second screen display direction is a landscape display direction.

3. The method according to claim 2, wherein the preset matching strategy comprises:
extracting transverse acceleration data and longitudinal acceleration data in acceleration data;
in response to that an absolute value of the transverse acceleration data is greater than that of the longitudinal acceleration data, determining that a matching screen display direction is the portrait display direction; and
in response to that an absolute value of the longitudinal acceleration data is greater than that of the transverse acceleration data, determining that a matching screen display direction is the landscape display direction.

4. The method according to any one of claims 1 to 3, wherein in a case that the first cycle is an initial cycle, after the determining a screen display direction matching the first acceleration data as a first screen display direction according to a preset matching strategy, the method further comprises:
controlling the OBU screen to display according to the first screen display direction.

5. The method according to any one of claims 1 to 4, further comprising:
obtaining road condition information of a vehicle;
recognizing road condition features according to the road condition information; and
adjusting the preset quantity according to the road condition features.

6. An On-Board Unit (OBU) screen rotation display apparatus, comprising:
a first determining module, configured to obtain first acceleration data of an OBU screen in a current cycle, and determine a screen display direction matching the first acceleration data as a first screen display direction according to a preset matching strategy;
a second determining module, configured to obtain second acceleration data of the OBU screen in a next cycle, and determine a screen display direction matching the second acceleration data according to the preset matching strategy;
a third determining module, configured to determine that the next cycle is a screen rotation effective cycle when the screen display direction matching the second acceleration data is a second screen display direction; and
a processing module, configured to control the OBU screen to rotate from the first screen display direction to the second screen display direction when it is determined that a quantity of consecutive screen rotation effective cycles exceeds a preset quantity.

7. The apparatus according to claim 6, wherein
the first screen display direction is a landscape display direction, and the second screen display direction is a portrait display direction, or,
the first screen display direction is a portrait display direction, and the second screen display direction is a landscape display direction.

8. The apparatus according to claim 7, wherein the preset matching strategy comprises:
extracting transverse acceleration data and longitudinal acceleration data in acceleration data;
when an absolute value of the transverse acceleration data is greater than that of the longitudinal acceleration data, determining that a matching screen display direction is the portrait display direction; and
when an absolute value of the longitudinal acceleration data is greater than that of the transverse acceleration data, determining that a matching screen display direction is the landscape display direction.

9. A non-temporary computer-readable storage medium, storing a computer program thereon, wherein when the computer program is executed by a processor, the On-Board Unit (OBU) screen rotation display method according to any one of claims 1 to 5 is implemented.

10. An On-Board Unit (OBU) multimedia device, comprising a memory, a processor, and a computer program stored on the memory and operable on the processor, wherein when the processor executes the computer program, the OBU screen rotation display method according to any one of claims 1 to 5 is implemented.
